# EUROPÄISCHE PATENTSCHRIFT

(11) **EP 1 581 446 B1**
(45) Veröffentlichungstag und Bekanntmachung des Hinweises auf die Patenterteilung: **16.08.2006**
(21) Anmeldenummer: 03788784.1
(22) Anmeldetag: 14.11.2003
(51) Int. Cl.: B65G 1/00

(54) **VERFAHREN UND VORRICHTUNG ZUM WECHSELN VON TRANSPORTELEMENTEN**
METHOD AND DEVICE FOR EXCHANGING TRANSPORT ELEMENTS
PROCEDE ET DISPOSITIF DESTINES A ECHANGER DES ELEMENTS DE TRANSPORT

(30) Priorität: 15.11.2002 DE 10253602; 13.02.2003 DE 20302336 U
(43) Veröffentlichungstag der Anmeldung: 05.10.2005
(73) Patentinhaber: GEBHARDT Transport- und Lagersysteme GmbH, 93413 Cham (DE)
(72) Erfinder: WANNINGER, Georg, 93495 Weiding (DE); JANKER, Rupert, 94372 Rattiszell (DE)
(74) Vertreter: Eder, Christian
(86) Internationale Anmeldenummer: PCT/DE2003/003759
(87) Internationale Veröffentlichungsnummer: WO 2004/045993

(56) Entgegenhaltungen:
- AU-B- 592 871
- DE-A- 1 920 979

## Beschreibung

Die vorliegende Erfindung betrifft ein Verfahren zum Umlegen von Güterstapeln und zum Wechseln von Transportelementen unter gestapelten Gütern gemäss dem Oberbegriff des Anspruchs 1 sowie eine Umladevorrichtung gemäss dem Oberbegriff des Anspruchs 7.

Aus dem Stand der Technik sind Vorrichtungen zum Umlegen von Stapeln und Auswechseln von Transportelementen unter gestapelten Gütern bekannt. Sie sollen das Problem lösen, auf einfache Weise ein bestimmtes Transportelement, beispielsweise eine Euro-Palette, unter einem darauf liegenden Stapel gegen ein anderes Transportelement auszutauschen, ohne den Stapel umzuschichten oder in sonstiger Weise ab- und wieder aufbauen zu müssen. Bekannt ist dabei insbesondere ein Verfahren, bei dem der Stapel um ein Maß gekippt oder ganz auf die Seite gelegt wird, um so die Palette zu entlasten und schließlich austauschen zu können.

Dieses Vorgehen bringt den Nachteil mit sich, dass der Stapel bei der Bewegung leicht auseinander fallen kann. Ein geordnetes Umlegen und Wiederaufrichten des Stapels ist nicht möglich.

Die GB 2 187 433 A beschreibt einen Palettenhandhabungsapparat, wobei gestapelte Güter zur Handhabung zwischen eine Palette und eine gegenüberliegende Stabilisierungsvorrichtung geklemmt werden. Die US 3,123,232 beschreibt ein Palettenwechselsystem innerhalb eines Fördersystems, bei dem ein an seiner Oberseite gegengestützter Stapel um ein Maß gekippt wird, während die Paletten gewechselt werden. Aus der DE 36 11 584 A1 ist eine Vorrichtung zur Handhabung von Gegenständen zu entnehmen, bei der ein ebenfalls zwischen Boden und Deckplatte geklemmter Stapel um eine horizontale Achse gedreht wird. Die DE 28 43 578 betrifft eine Lasttransfereinheit, die nach Anordnung einer neuen Palette auf einer Stapeloberseite und Umkehrung des Stapels samt Palette diese zur neuen tragenden Palette macht. Aus der DE-AS 1 920 979 eine Umsetzvorrichtung bekannt, die ebenfalls durch Schräglegen eines Stapels dessen stützende Palette entlastet und ihren Austausch ermöglicht.

Aufgabe der Erfindung ist es daher, ein Verfahren und eine Vorrichtung zum Austausch von Transportelementen vorzustellen, welches eine einfache und formstabile Handhabung des Stapels ermöglicht und zugleich schnell und kostensparend durchgeführt werden kann.

Die Aufgabe wird gelöst durch ein Verfahren mit den Merkmalen des Anspruchs 1 bzw. eine Umladevorrichtung mit den Merkmalen des Anspruchs 7.

Die Erfindung geht von der Erkenntnis aus, dass ein Stapel während des Austauschs der Transportelemente sicher geführt werden kann, wenn er auf wenigstens zwei gegenüberliegenden Seiten von Klemmbacken eingefasst wird, die dem Stapel eine höhere Stabilität verleihen. Auf diese Weise ist vorteilhaft sichergestellt, dass der Stapel, während er bewegt wird, nicht zu diesen Seiten hin ausbrechen kann. Angenommen wird dabei, dass ein Stapel mit gestapelten Gütern auf einem Transportelement aufliegt. Der Stapel mit dem Transportelement soll erfindungsgemäß auf einem Fußelement aufliegen, so dass der Stapel von dem Transportelement und dieses von dem Fußelement getragen wird.

Das erfindungsgemäße Verfahren läuft dabei nach folgenden Schritten ab:
d1) Herausnehmen des ersten Transportelements (T1).
d2) Einsetzen eines zweiten Transportelements (T2) an die gleiche Stelle.
e) Umkehrung der in Schritt c) genannten Bewegungen des Fußelements (F), so dass das zweite Transportelement (T2) wieder an das untere Ende des Stapel (S) angelegt wird.
f) Lösen der Fixierungen und Klemmungen nach Schritt a) und b)

Gemäß Verfahrensschritt a) soll ein Stapel von Gütern, der auf einem ersten Transportelement aufliegt, zunächst insbesondere auf seiner Oberseite fixiert werden. Dazu wird ein Fixierdeckel von oben auf den Stapel aufgelegt bzw. um ein vorgebbares Maß gegen die Oberseite des Stapels gedrückt. Der Stapel wird auf diese Weise zwischen dem Fixierdeckel und dem Transportelement, auf dem der Stapel ruht, fixiert.

Sodann wird der Stapel auf zwei weiteren Seiten (rechte und linke, bzw. vordere und hintere Seite) durch entsprechende Klemmbacken eingeklemmt. Diese Klemmbacken nähern sich also beispielsweise von rechts und links, bis sie an dem gestapelten Gut anliegen und dieses um ein wählbares Maß zusammendrücken, so dass der Stapel eine stabile seitliche Führung erfährt. Dies stellt vorteilhaft sicher, dass der Stapel während des Austausches des Transportelements nicht in sich zusammenbricht, da die seitliche Führung ein solches Ausbrechen bei geeigneter Dimensionierung der Klemmbacken sicher verhindern kann.

Gemäß Verfahrensschritt c) soll nun das Fußelement von der Unterseite des Stapels wegbewegt werden. Dies kann geschehen, indem das Fußelement um eine im Wesentlichen horizontal verlaufende Achse weggeschwenkt wird. Alternativ oder ergänzend ist auch möglich, das Fußelement in einer geradlinigen Bewegung von der Unterseite des Stapels fortzubewegen, also insbesondere in einer Richtung Z, die im Wesentlichen die senkrechte Ausrichtung des Stapels kennzeichnen soll. In jedem Fall soll die Bewegung des Verfahrensschritts c) dazu dienen, das erste Transportelement so freizugeben bzw. zu entlasten, dass es nicht mehr zwischen Fußelement und Stapel eingeklemmt ist und somit frei entnommen werden kann.

Die Entnahme des Transportelements bzw. der Austausch gegen ein neues Transportelement ist gemäß Verfahrensschritt d) vorgesehen. Die Entnahme bzw. der Austausch kann nur dann erfolgen, wenn das erste Transportelement vom Stapel tatsächlich unbelastet ist. Dies kann dadurch erreicht werden, dass die Klemmbacken von rechts und links den Stapel so weit zusammendrücken, dass ein innerer Halt des Stapels dafür sorgt, dass ein Herausfallen der gestapelten Güter nach unten bei Entnahme des Transportelements vermieden wird. Je nach Art des gestapelten Gutes bzw. des Klemmeffektes durch die Klemmbacken kann ein weiterer Verfahrensschritt erforderlich werden, der im Folgenden noch beschrieben wird.

Der Verfahrensschritt e) beschreibt die Umkehrung der Bewegung des Fußelements. Nachdem das neue Transportelement gegen das alte ausgetauscht und damit zwischen das Fußelement und die Unterseite des Stapels eingelegt wurde, muss das Fußelement zur sicheren Abstützung des Stapels wieder in seine Ausgangslage gefahren werden. Dies geschieht also durch Zurückschwenken bzw. Zurückfahren des Fußelements in Richtung auf die Unterseite des Stapels.

Der Stapel, der nach den vorstehenden Verfahrensschritten seine im Wesentlichen vertikale Ausrichtung nicht verändert hat, wird nun von den seitlich angebrachten Klemmbacken wieder befreit, und auch der Fixierdeckel auf der Oberseite des Stapels kann abgenommen werden, so dass dieser frei auf dem neuen Transportelement ruhen kann. Mit einem Gabelstapler oder einem sonstigen geeigneten Gerät kann das neue Transportelement mit dem Stapel von dem Fußelement abgehoben und weiter bewegt werden.

Diese Verfahrensschritte ermöglichen also das Umlegen des Stapels und den einfachen und sicheren Austausch eines ersten Transportelements gegen ein zweites, ohne die Stabilität des Stapels dabei zu gefährden.

In einer besonders vorteilhaften Ausführungsform der Erfindung erfolgt zwischen den Verfahrensschritten b) und c) ein Verschwenken des gesamten Stapels um eine im Wesentlichen horizontale Achse in eine Kipplage. Das bedeutet, dass der Stapel mitsamt den seitlich angeordneten Klemmbacken, dem oben aufliegenden Fixierdeckel und dem nach unten begrenzenden Transportelement bzw. Fußelement komplett in eine Schräglage gebracht wird. Dies hat den Vorteil, dass der Stapel dabei mit seinem Eigengewicht um ein wählbares Maß wenigstens eine seitliche Führung zusätzlich belastet und damit das Transportelement entlastet. Dieses seitliche Führungselement kann entweder eine der beiden Klemmbacken sein, jedoch ist auch ein Verschwenken in eine Rückenlage denkbar. Dabei neigt sich der Stapel auf eine Rückwand, an die die beiden seitlich angeordneten Klemmbacken im Wesentlichen rechtwinklig angeordnet sind. Auf diese Weise liegt der Stapel also an der Rückwand an, während er nach wie vor von den beiden seitlichen Klemmbacken auch in dieser Richtung fixiert wird.

Das Maß der Schwenkbewegung, also der Winkel, um den der gesamte Stapel gekippt werden soll, ist frei wählbar und richtet sich nach der notwendigen Entlastung des Transportelements. Auch eine Kippbewegung bis in die Horizontale, also um 90° oder auch darüber hinaus bis 180° ist denkbar. In dieser neuen - vorzugsweise waagerechten - Kipplage schließt sich dann der bereits beschriebene Verfahrensschritt c) an, um wiederum die Unterseite des Stapels, also das Transportelement selbst entlasten und austauschen zu können. Der Stapel liegt also während des eigentlichen Austauschvorganges in einer schrägen Kipplage.

Nach Austausch des Transportelements und entsprechender Rückbewegung des Fußelements erfolgt dann in Ergänzung zum ursprünglichen Verfahren natürlich auch wieder eine Rückschwenkbewegung des Stapels in seine im Wesentlichen aufrechte Position, so dass das neue Transportelement letztendlich wieder voll belastet werden kann. Spätestens mit Lösen der seitlichen Klemmbacken und mit Abheben des Fixierdeckels ruht der Stapel wieder vollständig auf dem jetzt neuen Transportelement, welches wiederum in geeigneter Weise vom Fußelement abgehoben und weiter verbracht werden kann.

Die erfindungsgemäße Kippbewegung kann einerseits so erfolgen, dass die Schwenkachse im Wesentlichen parallel zu einer Seitenfläche des Stapels ausgerichtet ist (also einer Rückwand oder einer der beiden Seitenwände). Denkbar ist jedoch alternativ auch ein Verschwenken um eine Achse, die im Wesentlichen horizontal verläuft und darüber hinaus zu den Seitenflächen des Stapels einen Winkel ≠ 90° einnimmt. Das bedeutet, dass der Stapel "über Eck" gekippt wird, so dass das Stapelgewicht sich im Wesentlichen auf zwei aneinander grenzende Seitenflächen des Stapels aufteilt. In der gekippten Stellung weist also eine von vier gedachten Längskanten des Stapels nach unten, während bei einem Schwenkvorgang um eine parallel zu einer Seitenfläche ausgerichtete Schwenkachse die beiden angrenzenden Seitenflächen im Wesentlichen senkrecht stehen.

Insbesondere in der horizontalen Ausrichtung des gekippten Stapels lässt sich der Stapel an einer beliebigen Stelle teilen, indem ein Trennkörper, der beispielsweise auch ein Transportelement sein kann, zwischen zwei Lagen der Stapelelemente eingebracht wird. Die Elemente der zu bildenden Stapelteile können dabei in horizontaler Richtung leichter verschoben werden, um den nötigen Spalt für das Trenn- bzw. Transportelement zu schaffen. Gegebenenfalls kann der Fixierdeckel zu diesem Zweck von der Stapeloberseite gelöst bzw. gelockert werden; um ein horizontales Verschieben der Stapelelemente bzw. Stapellagen zu ermöglichen.

Nach Rückschwenken in die Ausgangslage weist der Stapel nunmehr - je nach vorgenommener Korrekturmaßnahme - ausgerichtete Seitenflächen, ein ausgewechseltes unteres Transportelement oder weitere Zwischenelemente auf, mit der der Stapel in einzelne Teile unterteilt wurde. Idealerweise sind die eingeschobenen Zwischenelemente ebenfalls Transportelemente, so dass sie beispielsweise mit einem Gabelstapler leicht abgehoben werden könne. Dadurch lässt sich der ursprünglich durchgehende Stapel ohne besonderen Aufwand in einzelne Stapel unterteilen, abhängig von den in der horizontalen Kipplage eingelegten Transportelementen.

In einer vorteilhaften Ausführungsform der Erfindung ist die Rückwand in ihrer Längs- und/oder Querrichtung in wenigstens zwei relativ zueinander verfahrbare Wandelemente geteilt. Durch dieses konstruktive Merkmal wird vorteilhaft erreicht, dass ein in die horizontale Kipplage gebrachter Stapel alleine dadurch in mehrere Teile geteilt werden kann, dass die Wandelemente so voneinander weggeschoben werden können, dass dazwischen ein natürlicher Spalt entsteht. In der Kipplage ruht nämlich ein Teil des Stapels auf einem der beiden Wandelemente, während der anderen Teil des Stapels auf dem anderen Wandelement aufliegt. Zieht man nun diese beiden Wandelemente auseinander, so teilt sich der aufliegende Stapel und ermöglicht das Einschieben eines Trennelements bzw. eines Transportelements. Diese Teilung des Stapels kann dabei erfolgen in Längsrichtung des ursprünglichen Stapels, so dass sich mehrere "schmalere" Stapel mit der ursprünglichen Stapelhöhe ergeben. Ebenso kann die Teilung auch quer zur ursprünglichen Stapellängsrichtung erfolgen, wenn die Rückwand entsprechen geteilt ist. Schließlich ist auch eine Kombination der beiden Teilungsvarianten möglich, so dass ein Stapel gleichzeitig der Länge nach und quer dazu geteilt werden kann.

Selbstverständlich ist die Unterteilung der Rückwand in mehr als zwei Wandelemente denkbar. Auch kann das Auseinanderfahren der Wandelemente durch entsprechende Antriebe und gegebenenfalls eine Steuerung automatisiert werden.

Für die Bewegung der Wandelemente relativ zueinander können die seitlichen Klemmbacken gelöst werden, um die gestapelten Güter mit dem jeweiligen Wandelement leichter bewegen zu können.

Sinngemäß gilt für die verschiebbaren Wandelemente auch die rückwärts ablaufende Vorgehensweise. Danach können zwei aufeinander stehenden Stapel, die jeweils von einem Transportelement getragen werden, in der horizontalen Lage leicht zu einem durchgehenden Stapel umgeformt werden. Dazu würden die Wandelemente so auseinandergefahren, dass die beiden Stapel zunächst losgelöst voneinander in horizontaler Ausrichtung zu liegen kämen. Nach Entnahme des Transportelements des oberen Stapels und anschließendem Zusammenfahren der Wandelemente käme die Unterseite des oberen Stapels unmittelbar auf der Oberseite des unteren Stapels zu liegen. Nach dem Zurückschwenken des nunmehr kompletten Stapels in die aufrechte Lage könnte somit der neu gebildete komplette Stapel weiter verbracht werden.

Eine weitere vorteilhafte Ausführungsform des Verfahrens sieht vor, dass einige der vorgenannten Verfahrensschritte wenigstens teilweise gleichzeitig ausgeführt werden. Dies spart vorteilhaft Zeit und damit auch Kosten. So kann beispielsweise das Auflegen des Fixierdeckels und die Klemmung durch die beiden seitlichen Klemmbacken gleichzeitig erfolgen. Denkbar ist sogar, diese beiden Bewegungen gemeinsam mit der Schwenkbewegung des gesamten Stapels durchzuführen, wodurch erneut Zeit eingespart wird. Entsprechend können auch die entgegengesetzten Bewegungen, mit denen der Stapel letztlich wieder in seine Ausgangsposition gebracht wird, wenigstens teilweise gemeinsam ausgeführt werden, um Zeit und Kosten zu sparen.

Eine Vorrichtung zur Durchführung des vorgenannten Verfahrens sieht dabei zunächst eine Rückwand mit einem unteren und einem oberen Ende vor. Die Rückwand soll sich in einer Richtung Z erstrecken, wobei die Richtung Z und damit die Rückwand in einer Ausgangslage des Stapels zunächst vertikal ausgerichtet sein soll. Die Richtung Z sei im Folgenden mit der Rückwand verknüpft, so dass eine Schwenkbewegung der Rückwand gleichzeitig eine Schwenkbewegung der Richtung Z bedeuten soll.

Am unteren Ende der Rückwand soll ein Fußelement beweglich befestigen, welches zur Aufnahme eines ersten Transportelements ausgebildet ist. Im einfachsten Fall bildet das Fußelement mit der Rückwand einen rechten Winkel, jedoch ist auch ein anderer Winkel grundsätzlich denkbar. Das Fußelement ist dabei um eine parallel zur Rückwand und senkrecht zur Richtung Z verlaufenden Schwenkachse schwenkbar und/oder in Richtung Z auf den Stapel zu- bzw. von diesem weg verfahrbar. Durch diese Bewegbarkeit des Fußelements wird das Freigeben des Transportelements, welches zwischen dem Fußelement und dem Stapel zunächst eingeklemmt ist, ermöglicht.

Am oberen Ende der Rückwand soll ein Fixierdeckel angeordnet sein, der parallel zur Rückwand in Richtung Z verfahrbar sein soll. Ergänzend oder alternativ ist ebenso denkbar, diesen Fixierdeckel schwenkbar auszuführen, so dass er beispielsweise um eine parallel zur Rückwand und senkrecht zur Richtung Z verlaufende Schwenkachse von oben auf den Stapel aufschwenkbar ist. Zweck dieses Fixierdeckels ist das Fixieren des Stapels, insbesondere zuoberst aufgelegten Komponenten. Insbesondere bei einer Schräglage des Stapels werden so die zuoberst aufliegenden Komponenten sicher gehalten. Da sind wenigstens zwei seitliche Klemmbacken vorgesehen, die den Stapel an zwei gegenüberliegenden Seiten einfassen und gegebenenfalls um ein wählbares Maß zusammendrücken. Durch diese Seitenbacken erfährt der Stapel - wie zuvor beschrieben - eine gute seitliche Führung, durch welche das Auseinanderfallen des Stapels während des Transportelementaustausches vermieden wird.

Das unter dem Stapel angeordnete Fußelement so wegbewegt bzw. geschwenkt werden, dass das Transportelement frei entnehmbar ist. Voraussetzung dafür ist wiederum die innere Stabilität des Stapels, die durch die Klemmfunktion der Klemmbacken beeinflusst wird.

Selbstverständlich ist es denkbar, statt an zwei auch an allen vier Seitenflächen des Stapels Klemmbacken vorzusehen, so dass der Stapel quasi rundherum sicher eingefasst und stabilisiert wird.

Eine vorteilhafte Ausführungsform der erfindungsgemäßen Umlagevorrichtung sieht vor, dass die gesamte Vorrichtung um eine parallel zur Rückwand und im Wesentlichen horizontal verlaufende Kippachse aus einer Ausgangslage in eine Kipplage schwenkbar ist. Wie schon für das Verfahren beschrieben, wird dadurch eine zusätzliche Belastung der durch die Klemmbacken stabilisierten Seitenflächen des Stapels erreicht, während mit zunehmender Schräglage das untere Transportelement bzw. das Fußelement entlastet wird. Bei geeigneter Anordnung dieser Schwenkachse wird das Transportelement dabei zusätzlich in eine gewisse Höhe angehoben, die für das Arbeitspersonal, welches den Austausch vornimmt, ergonomisch vorteilhaft ist.

Alternativ zur Schwenkbarkeit der Vorrichtung ist auch denkbar, den Stapel mit seinen Klemmbacken, Rückwand, Fixierdeckel, Transportelement und Fußelement im Wesentlichen vertikal in eine gewisse Höhe anzuheben. Dies ermöglicht die Schwenk- oder Verfahrbewegung des Fußelements, um das Transportelement freizugeben. Die tatsächlich erforderliche Hubhöhe richtet sich dabei nach dem Schwenk- bzw. Verfahrbereich, den das Fußelement beansprucht, während es sich von der Unterseite des Transportelements wegbewegt. Die ausschließlich vertikale Bewegung des Stapels und die anschließende Wegbewegung des Fußelements ist - wie bereits beschrieben - dann sinnvoll und möglich, wenn der Stapel allein durch die Klemmbacken so in sich stabilisiert ist, dass selbst bei Entnahme des Transportelements die einzelnen Komponenten des Stapels nicht nach unten ausbrechen. Die Hubbewegung ermöglicht vorteilhaft ein ergonomisch angenehmes Arbeiten und eine technisch einfache Konstruktion.

Selbstverständlich ist auch eine Kombination der beiden Merkmale denkbar, so dass der Stapel sowohl um eine horizontale Achse kippbar als auch in vertikaler Richtung anhebbar ist. Auf diese Weise können die ergonomischen und räumlichen Erfordernisse ideal aufeinander abgestimmt werden, und die Vorrichtung ermöglicht je nach Beschaffenheit des Stapels (innere Stabilität) den Austausch der Transportelemente in gekippter oder aufrechter Stapelstellung.

Eine vorteilhafte Ausführungsform der Erfindung sieht analog zum vorbeschriebenen Verfahren eine in ihrer Längs- und/oder Querrichtung (auch mehrfach) teilbare Rückwand vor, um den auf ihr liegenden Stapel in der Kipplage auf einfache Weise in mehrere Teile teilen zu können. Durch Auseinanderziehen der Wandelemente teilt sich der aufliegende Stapel und ermöglicht das Einschieben oder Herausnehmen eines Trennelements bzw. eines Transportelements.

Besonders vorteilhaft sind die Klemmbacken in jeder Lage des Stapels auf Anforderung von den Seitenflächen lösbar bzw. an diese andrückbar. Damit wird vorteilhaft erreicht, dass die Seitenflächen des Stapels nur dort entlastet werden können, wo ein Zugriff auf den Stapel - beispielsweise zum Ausrichten der Seitenflächen oder zum Einfügen eines Transportelements - erforderlich ist.

Eine besonders vorteilhafte Ausführungsform der Erfindung sieht vor, dass die Klemmbacken zum Ausgleich von Unebenheiten in den Seitenflächen wenigstens ein Ausgleichselement aufweisen. Dieses Ausgleichselement dient dazu, Unebenheiten in den Seitenflächen wenigstens teilweise so auszufüllen, dass alle Elemente des Stapels möglichst gut abgestützt werden. Hierbei bietet sich ein elastisches Ausgleichselement an, welches sich beim Anlegen an die Seitenfläche des Stapels einem möglichen Versatz der Elemente bzw. Lücken in der Oberfläche anpasst bzw. diese ausfüllt. Denkbar ist dabei ein polsterartiges Element oder in sonstiger Weise weich beschaffenes Material, welches bei Annäherung an die Seitenfläche die Form dieser Fläche möglichst gut annimmt. Darüber hinaus bietet ein solches Ausgleichselement einen Schutz für die Elemente des Stapels, die damit weich eingefasst werden und gegen mögliches Verkanten oder Verschieben geschützt sind.

In einer vorteilhaften Ausführungsform der Erfindung ist ein solches oder vergleichbares Ausgleichelement auch für den Fixierdeckel vorgesehen. Dabei wird der Stapel auf seiner Oberseite durch den Deckel so fixiert, dass sich das Ausgleichselement an Unebenheiten auf der Stapeloberseite anpasst. Insbesondere bei nicht vollständig aufgeschichteten Stapeln bzw. teilweise angebrochenen Stapeln, bei denen einzelne Elemente der obersten Deckschicht fehlen, kann über das Ausgleichselement ein komplettes und sicheres Abstützen der gesamten Stapeloberseite erreicht werden. Das Ausgleichselement wird dann hier analog zu den Klemmbacken an den Seitenflächen zwischen dem Fixierdeckel und Stapeloberseite angeordnet.

Eine vorteilhafte Ausführungsform der Erfindung sieht vor, dass das Ausgleichselement des Fixierdeckels und/oder die Ausgleichselemente an den Klemmbacken als Airbag oder Polster ausgeführt sind. Der Airbag weist den Vorteil auf, dass er durch Aufblasen seine Form unmittelbar an die jeweilige Seiten- bzw. Oberfläche des Stapels anpasst, ohne dass eine zusätzliche mechanischen Bewegung der Klemmelemente oder des Niederhalters erforderlich wird. Darüber hinaus kann durch den Druck im Airbag die Anpress- bzw. Stabilisierungskraft vorher gewählt werden. Durch plötzliches Entspannen des Airbags werden die beaufschlagten Flächen des Stapels schnell und ohne das Erfordernis einer mechanischen Bewegung wieder freigegeben.

Dem gegenüber bietet das technisch weniger aufwendige Polster die Möglichkeit, unmittelbar an den Klemmbacken oder dem Fixierdeckel dauerhaft und wartungsarm angebracht zu werden. Allein durch die Bewegung des Niederhalters oder der Klemmelemente auf die entsprechende Fläche des Stapels zu wird das Polster in eventuelle Aussparungen oder Unebenheiten der Stapelfläche eingedrückt und stabilisiert somit insgesamt die entsprechende Fläche. Derart stabilisiert lässt sich der Stapel stabiler aufrichten bzw. kippen.

Das Fußelement ist in einer vorteilhaften Ausführungsform der Erfindung sowohl in der aufrechten als auch in der gekippten Lage und auch in jeder Lage dazwischen schwenkbar und/oder verfahrbar. Auf diese Weise können verschiedene Mindestneigungen je nach Stapelbeschaffenheit eingestellt werden, in denen das Fußelement jeweils bewegbar sein soll. Dadurch ist maximale Flexibilität beim Umladen unterschiedlichster Stapel bzw. ihrer Transportelemente gegeben.

Eine besonders vorteilhafte Ausführungsform der Erfindung sieht vor, dass die seitlich angeordneten Klemmbacken durch eine Schwenkbewegung auf die Seitenflächen des Stapels zu- bzw. von diesen weggeschwenkt werden können. Dies kann mit einfachen technischen Mitteln realisiert werden und spart Herstellungskosten und Umladezeit. Die Schwenkachse der Klemmbacken ist dabei vorzugsweise in Z-Richtung angeordnet und beispielsweise im Bereich der Rückwand rechts und links angebracht.

Alternativ oder ergänzend dazu ist weiterhin vorgesehen, dass sich die Klemmbacken auch geradlinig auf die Seiten des Stapels zubewegen lassen. Die Klemmbacken bewegen sich dabei also im Wesentlichen rechtwicklig zur Z-Richtung in einer X-Richtung auf den Stapel zu. Dadurch können vorteilhaft verschiedene Stapelbreiten eingefasst werden, wodurch die Flexibilität der Anwendung der Vorrichtung erhöht wird. Denkbar ist insbesondere eine Vorrichtung, bei der auf jeder Seite ein um eine in Z-Richtung verlaufende Schwenkachse angeordneter Rahmen die eigentliche Klemmbacke trägt, wobei diese Klemmbacke gegenüber dem Rahmen linear verschieblich angeordnet ist. Dies ermöglicht zunächst ein Einschwenken der beidseitigen Klemmbacken dergestalt, dass die Klemmbacken zunächst parallel zu den Seitenwänden des Stapels angeordnet sind. Im nächsten Schritt können die Klemmbacken dann senkrecht zur Z-Richtung und linear auf die Stapelseiten zubewegt werden, um den Stapel selbst zu fixieren.

Bei der entgegengesetzten Bewegung zur Freigabe des Stapels kann dann beispielsweise unmittelbar ein Zurückschwenken erfolgen, um den Stapel gleich zum Weitertransport freizugeben. Eine Zurückbewegung der Klemmbacken in linearer Richtung relativ zu den genannten Rahmen kann dann zu einem späteren, nicht zeitkritischen Zeitpunkt erfolgen.

Denkbar ist jedoch auch ein ausschließlich lineares Bewegen der Klemmbacken, so dass eine Schwenkbewegung gar nicht vorgesehen ist. Auf diese Weise wird der mechanische Aufwand in Grenzen gehalten, wodurch sich die Herstellungskosten verringern.

Eine weitere vorteilhafte Ausführungsform der Erfindung sieht ein Rüttelelement vor, mit dem der Stapel vorzugsweise in der Kipplage zur Neuausrichtung einzelner Elemente des Stapels in Vibration versetzbar ist. Das Rüttelelement ist dabei so ausgebildet, dass die Umladevorrichtung wenigstens im Bereich der Rückwand vibriert bzw. gerüttelt wird. Uneben aufgeschichtete Elemente oder Lücken zwischen den Elementen bzw. ein Versatz auf den Außenflächen können dadurch beseitigt werden, dass durch das Rütteln die einzelnen Elemente relativ zueinander gleiten und damit einen dichteren Verbund bilden können. Gegebenenfalls können dazu die Andruckkräfte des Fixierdeckels oder der Klemmbacken bzw. möglicher Ausgleichselemente so reduziert werden, dass ein Neuausrichten der Elemente des Stapels bei der Vibration erleichtert wird.

Nach erfolgter Neuausrichtung können die Klemmbacken und/oder der Fixierdeckel wieder mit erhöhter Andruckkraft an den Stapel angedrückt werden, um ihn in dieser kompakten Form zu stabilisieren. Durch anschließende Kippbewegung zurück in die aufrechte Stellung wird der Stapel in dieser homogenen und kompakten Form zum Weitertransport bereitgestellt.

Das Rüttelelement kann beispielsweise über einen Exzenter oder eine sonstwie bewegte Unwucht realisiert sein. Auch mehrere Rüttelelemente an verschiedenen Stellen der Umladevorrichtung sind denkbar.

Eine vorteilhafte Ausführungsform der Erfindung ist weiterhin dadurch gekennzeichnet, dass die Schwenkbewegung ca. um 180 ° erfolgt, also der Stapel insgesamt auf den Kopf stellbar ist. Insbesondere ist es damit möglich, ein unter einem Stapel vorgesehenes Transportelement auszutauschen, indem auf die Oberseite des Stapels ein weiteres Transportelement aufgelegt wird, und der Stapel anschließend um 180 ° um eine horizontale Achse gedreht wird. Das ehemals oben aufliegende Transportelement wird dabei zum belasteten unteren Transportelement, auf dem der Stapel ruht. Das ehemals untere Transportelement liegt nun auf der neuen Oberseite des Stapels unbelastet auf und kann entnommen werden.

Die Kippbewegung um 180 ° erfolgt dabei vorzugsweise um eine Achse, die sich etwa im Bereich der halben Stapelhöhe befindet. Eine solche Vorrichtung eignet sich insbesondere für solche Stapel, bei denen die Stapelordnung irrelevant ist, also die einzelnen Elemente und somit der Stapel auch kopfüber gestapelt werden könnten.

Eine vorteilhafte Ausführungsform der Erfindung sieht weiterhin vor, dass für die Bewegungen der Komponenten der Umladevorrichtung wenigstens teilweise Antriebe vorgesehen sind, um den Austausch der Transportelemente und das Umlegen der Stapel wenigstens teilweise zu automatisieren. Zu diesem Zweck wird vorteilhafterweise eine Steuerung verwendet, welche die einzelnen Antriebe ansteuert bzw. koordiniert. Dabei kann es sich um hydraulische Antriebe, Linearantriebe, pneumatische Antriebe oder auch sonstige, insbesondere motorbetriebene Antriebe handeln.

Weitere vorteilhafte Ausführungsformen ergeben sich aus den Unteransprüchen.

Eine Ausführungsform der Erfindung wird nachstehend anhand von Figurenbeispielen beschrieben. Es zeigen:
- Fig. 1: eine perspektivische Ansicht der erfindungsgemäßen Umladevorrichtung in einer Ausgangslage A;
- Fig. 2: eine Seitenansicht der Umladevorrichtung nach Fig. 1;
- Fig. 3: eine Draufsicht auf die Umladevorrichtung nach Fig. 1 und Fig. 2;
- Fig. 4: die Umladevorrichtung in einer Kipplage B;
- Fig. 5: eine perspektivische Frontansicht der Umladevorrichtung in Ausgangslage A;
- Fig. 6: eine perspektivische Schrägansicht der Kipplage B;
- Fig. 7: eine perspektivische Schrägansicht in einer Zwischenlage;
- Fig. 8: eine vereinfachte Seitenansicht für beide Lage A, B, und
- Fig. 9: eine vereinfachte Frontansicht in Lage A.

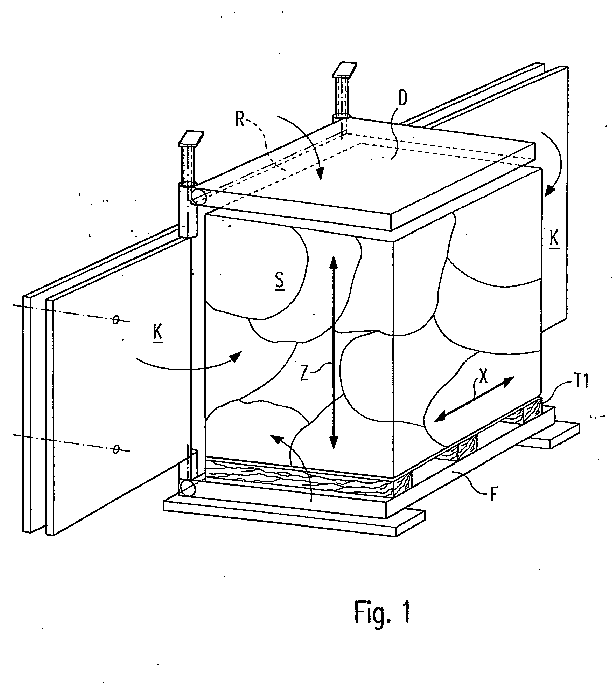

Wie in Fig. 1 zu erkennen ist, ist ein Fußelement F vorgesehen, welches im Wesentlichen horizontal angeordnet ist. Das Fußelement F trägt ein Transportelement T1, auf welchem ein Stapel S aufgestapelt liegt. Der Stapel S besteht aus verschiedenen Gütern und erstreckt sich im Wesentlichen in einer Richtung Z.

Angrenzend an das Fußelement F ist eine ebenfalls im Wesentlichen in Richtung Z errichtete Rückwand R vorgesehen. Die Rückwand R stützt den Stapel S nach hinten ab. Am oberen Ende der Rückwand R ist ein Fixierdeckel D vorgesehen, welcher von oben auf den Stapel S auflegbar ist. Der Fixierdeckel D ist um eine horizontale Achse schwenkbar angeordnet, wobei die Achse parallel zur Rückwand R verlaufen soll.

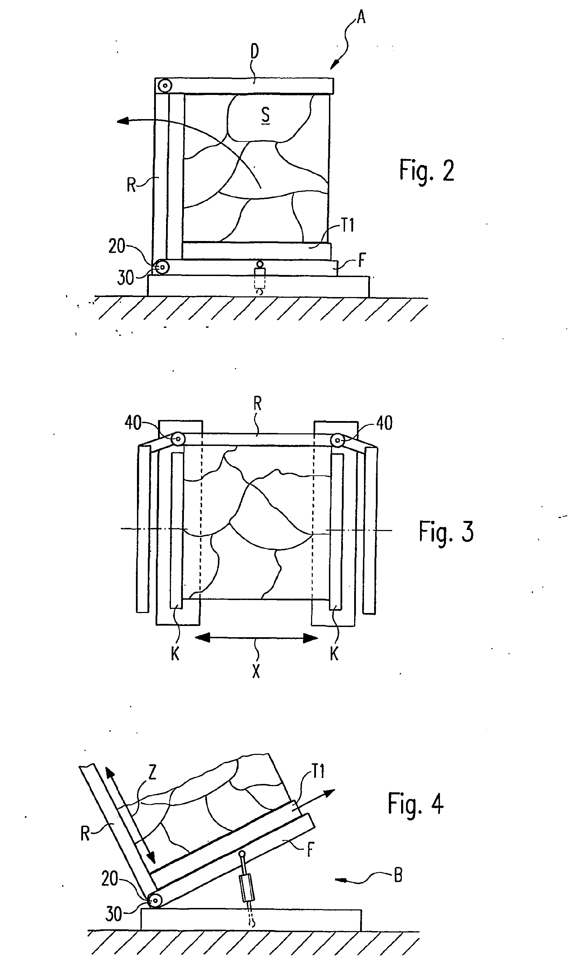

Auf den beiden Seiten des Stapels S sind zwei Klemmbacken K vorgesehen, die im Wesentlichen in Richtung Z ausgerichtet sind. Die Klemmbacken K sind - wie insbesondere in Fig. 3 zu erkennen ist - um zwei in Z-Richtung verlaufende Schwenkachsen 40 so schwenkbar, dass sie an den Seitenflächen des Stapels S zu liegen kommen. Bei eingeschwenkten Klemmbacken K wird der Stapel S auf seiner Rückseite durch die Rückwand R, auf den beiden Seiten rechts und links durch die Klemmbacken K auf seiner Oberseite durch den Fixierdeckel D und auf seiner Unterseite durch das Transportelement T1 bzw. das Fußelement F eingefasst.

Wie in der Draufsicht nach Fig. 3 weiterhin zu erkennen ist, sind die Klemmbacken K linear verfahrbar in einer Richtung X, welche senkrecht zur Richtung Z und parallel zur Rückwand R verläuft. Auf diese Weise können die Klemmbacken K also linear auf den Stapel S zugestellt werden, nachdem sie durch Schwenken um die Achsen 40 bereits parallel zu den Stapelseitenwänden ausgerichtet wurden.

In Fig. 2 ist die Seitenansicht des Stapels in der Ausgangslage A zu sehen. Deutlich zu erkennen ist das Fußelement F, auf dem das Transportelement T1 gelagert ist. Zu erkennen ist weiterhin eine horizontal angeordnete Achse 20, um die der Stapel S und die den Stapel einfassenden Komponenten relativ zu einer Basisplattform in eine Kipplage B schwenkbar ist.

In Fig. 4 ist diese Kipplage B dargestellt. Die Rückwand R und das Fußelement F sind also gemeinsam geschwenkt worden um die Achse 20.

Ebenfalls erkennbar in Fig. 2 und Fig. 3 ist eine Achse 30, um die das Fußelement F relativ zur Rückwand R schwenkbar ist. Im gezeigten Beispiel liegen die Achsen 20 und 30 ineinander. Denkbar ist jedoch auch eine andere Anordnung der beiden Achsen, so dass also die Vorrichtung um eine andere Achse schwenkbar ist, als das Fußelement relativ zur Rückwand R.

In der Kipplage B, wenn sich der Stapel S zu einem Teil gegen die Rückwand R neigt, kann das Fußelement F um ein Maß weggeschwenkt werden von der Unterseite des Stapels S, so dass das Transportelement T1 - wie in Fig. 4 angedeutet ist - unter dem Stapel herausgenommen werden kann, ohne dass der Stapel zusammenfällt. Durch Einsetzen eines anderen Transportelements an die gleiche Stelle und Zurückschwenken des Fußelements F wird der Stapel S von unten wieder stabilisiert, so dass er bei Zurückschwenken der kompletten Vorrichtung um die Achse 20 wieder in seine aufrechte Lage gebracht werden kann.

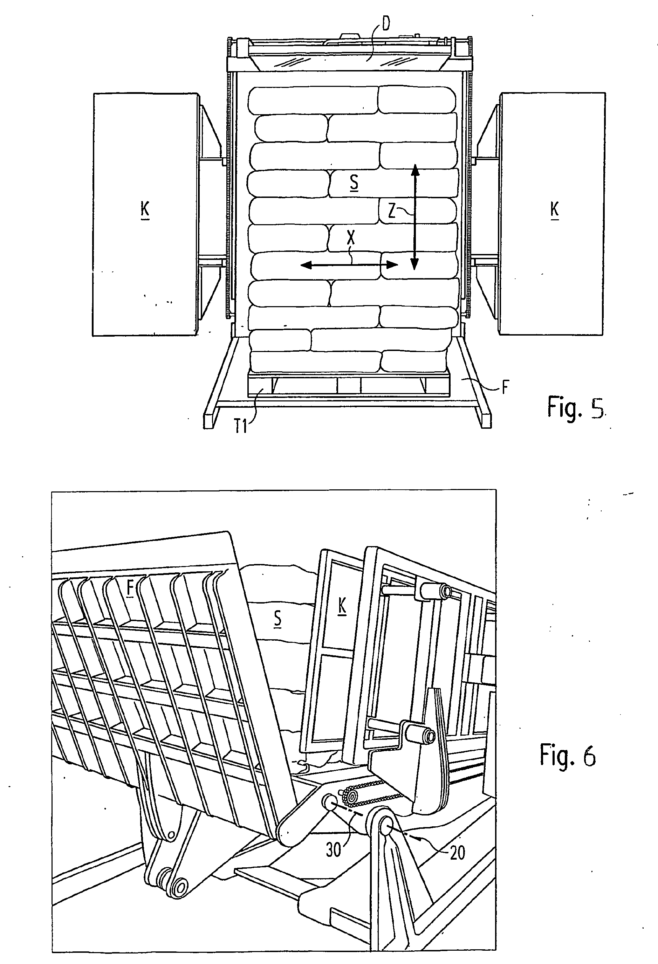

In Fig. 5 ist die Umladevorrichtung von vorne zu sehen. Die beiden Klemmbacken K sind in nicht angelegtem Zustand rechts und links von dem Stapel S zu sehen. Der Stapel S wird an seiner Oberseite von dem Fixierdeckel D und an seiner Unterseite von dem Transportelement T1, welches auf dem Fußelement F aufliegt, eingefasst.

Fig. 6 zeigt eine schematische Schrägansicht in der Kipplage B. Der nun horizontal liegende Stapel S wird von den beiden Klemmbacken K (von denen in Fig. 6 nur eine zu sehen ist) seitlich eingefasst. Das Fußelement F ist von der ehemaligen Unterseite des Stapels S um die Achse 30 weggeklappt, und das Transportelement ist entnommen.

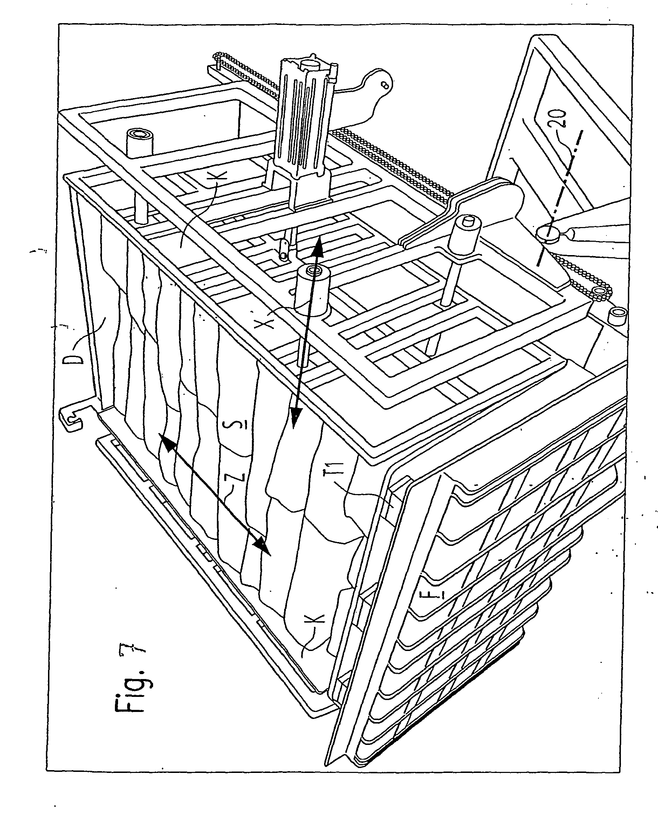

Fig. 7 zeigt die Umladevorrichtung in einer relativ zur Ausgangslage A veränderten Lage. Dabei kann es sich bereits um die angestrebte Kipplage B oder um eine Lage zwischen der Ausgangslage A und der Kipplage B handeln.

Die Klemmbacken K fassen den Stapel S von zwei gegenüberliegenden Seiten ein. Die Klemmbacken K sind dazu in Richtung X auf den Stapel zubewegt worden. In Richtung Z wird der Stapel S wieder über ein auf dem Fußelement F aufliegendes Transportelement T 1 bzw. den Fixierdeckel D eingefasst.

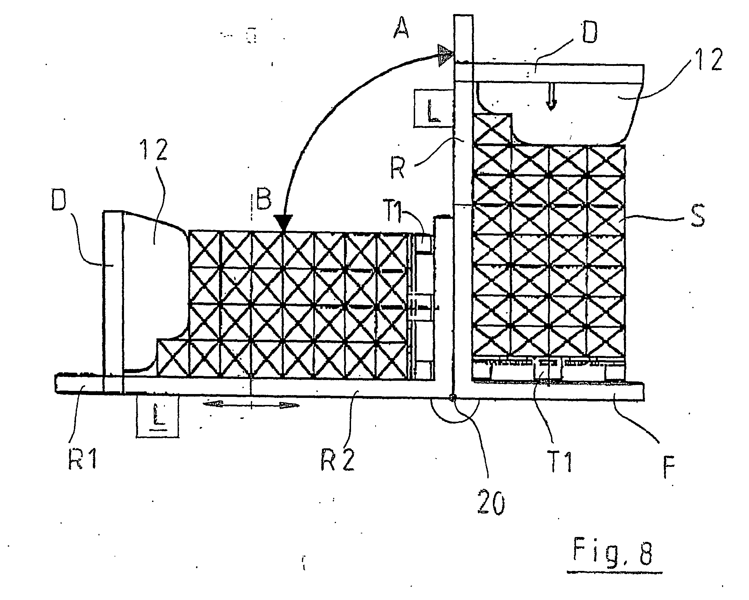

Die Fig. 8 zeigt eine Umladevorrichtung in der Ausgangslage A und in einer dazu senkrechten Kipplage B. In der Ausgangslage A ruht der Stapel S auf dem Transportelement T1. Die Stapeloberseite wird von dem Fixierdeckel D in Verbindung mit einem als Airbag ausgebildeten Ausgleichselement 12 stabilisiert.

Weiterhin ist der Stapel S in der im wesentlichen horizontalen Kipplage B dargestellt, in welche er durch Schwenken aus der Ausgangslage A um die Achse 20 gelangt.

Die Rückwand R ist geteilt in zwei Wandelemente R1 und R2, welche gegeneinander in Längsrichtung der Rückwand R im Sinne des angedeuteten Pfeils verfahrbar sind. Durch Auseinanderfahren der beiden Wandelemente R1 und R2 entsteht an der Trennstelle ein Spalt, in den ein Trennelement oder auch ein Transportelement eingefügt werden kann.

Weiterhin ist ein Rüttelelement L im Bereich der Rückwand R angeordnet, um durch steuerbare Vibrationen die einzelnen Komponenten des Stapels auszurichten bzw. zu ordnen.

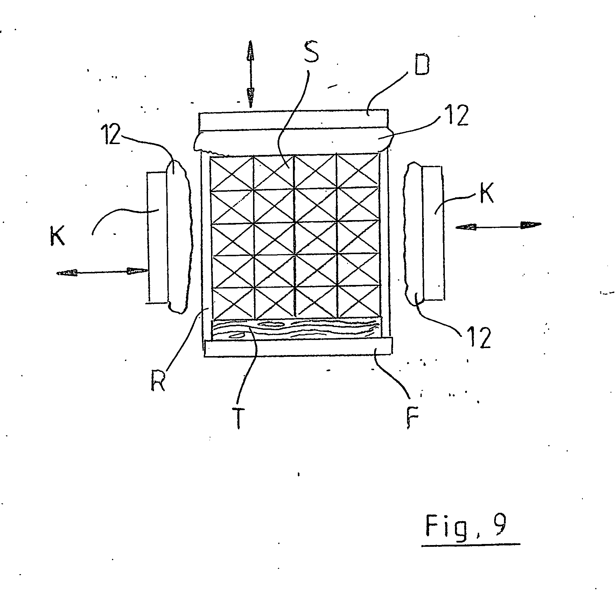

In Fig. 9 ist eine Umladevorrichtung in der Ausgangslage A von vorne schematisch dargestellt. Zu erkennen ist insbesondere, dass zwischen den Klemmbacken K und dem Stapel S bzw. dem Fixierdeckel D und dem Stapel S Ausgleichselemente 12 angeordnet sind, welche den Stapel von wenigstens drei Seiten stabilisieren sollen, nachdem die Klemmbacken und der Fixierdeckel auf den Stapel zubewegt wurden.

## Patentansprüche

1. Verfahren zum Umlegen von Stapeln und zum Wechseln von Transportelementen unter gestapelten Gütern nach folgenden Verfahrensschritten:
a) Fixieren eines in einer Ausgangslage (A) auf einem ersten Transportelement (T1) ruhenden Güterstapels (S) zwischen dem ersten Transportelement am unteren Ende des Stapels (S) und einem am gegenüberliegenden oberen Ende des Stapels (S) vorgesehen Fixierdeckel (D), wobei das erste Transportelement (T1) auf einem Fußelement (F) aufliegt,
b) Einklemmen des Stapels zwischen wenigstens zwei weiteren, einander gegenüberliegenden Seitenflächen durch wenigstens zwei Klemmbacken (K),
c) Verschwenken und/oder Verfahren des Fußelements (F) weg von der Unterseite des Stapels (S), so dass das erste Transportelement freigegeben wird.
**gekennzeichnet durch** folgende Verfahrensschritte:
d1) Herausnehmen des ersten Transportelements (T1).
d2) Einsetzen eines zweiten Transportelements (T2) an die gleiche Stelle.
e) Umkehrung der in Schritt c) genannten Bewegungen des Fußelements (F), so dass das zweite Transportelement (T2) wieder an das untere Ende des Stapel (S) angelegt wird.
f) Lösen der Fixierungen und Klemmungen nach Schritt a) und b)

2. Verfahren nach Anspruch 1, **dadurch gekennzeichnet,**
- **dass** zwischen Schritt b) und c) zur Entlastung des ersten Transportelements (T1) und des Fußelements (F) ein Verschwenken des gesamten Stapels (S) um eine im wesentlichen horizontale Achse (20) in eine Kipplage (B) erfolgt, und
- **dass** eine dazu umgekehrte Schwenkbewegung zwischen Schritt e) und f) erfolgt.

3. Verfahren nach Anspruch 2, **dadurch gekennzeichnet, dass** der Stapel in der Kipplage (B) im wesentlichen horizontal angeordnet ist.

4. Verfahren nach Anspruch 3, **dadurch gekennzeichnet, dass** der Stapel in der Kipplage (B) durch Verfahren einer in mindestens 2 Wandelemente (R1, R2) teilbaren Rückwand (R) in zwei Stapel geteilt wird, um dazwischen ein Trenn- oder Transportelement einzufügen oder zu entnehmen.

5. Verfahren nach Anspruch 4, **dadurch gekennzeichnet, dass** für den Vorgang der Stapelteilung die Klemmbacken gelöst werden.

6. Verfahren nach einem der vorigen Ansprüche, **dadurch gekennzeichnet, dass** sich einige der Schritte zeitlich überlappen.

7. Umladevorrichtung zum Umlegen von auf Transportelementen (T1) gestapelten Gütern und Wechseln von Transportelementen, insbesondere zur Durchführung eines der vorgenannten Verfahren, mit
a) einer Rückwand (R) mit einem unteren und einem oberen Ende, wobei die Rückwand (R) in einer Richtung (Z) verläuft, und die Richtung (Z) in einer Ausgangslage (A) im Wesentlichen vertikal ausgerichtet ist, und
b) einem Fußelement (F) zur Aufnahme eines auf einem ersten Transportelement (T1) angeordneten Güterstapels (S), wobei das Fußelement (F) um eine parallel zur Rückwand (R) verlaufende Schwenkachse (30) schwenkbar und/oder in Richtung (Z) verfahrbar ist, und
c) mit einem am oberen Ende der Rückwand (R) angeordneten, in Z-Richtung verfahrbaren und/oder um eine Achse schwenkbaren Fixierdeckel (D) zur Klemmung des Stapels (S) in Richtung (Z) zwischen Fixierdeckel (D) und Fußelement (F), und
d) mit wenigstens zwei seitlichen Klemmbacken (K) zur Klemmung des Stapel von recht und links zwischen den Klemmbacken (K), **dadurch gekennzeichnet , dass** das Fußelement (F) am unteren Ende der Rückwand beweglich befestigt ist.

8. Umladevorrichtung nach Anspruch 7, **dadurch gekennzeichnet, dass** die Vorrichtung um eine parallel zur Rückwand (R) verlaufende Kippachse (20) aus der Ausgangslage (A) in eine Kipplage (B) schwenkbar ist.

9. Umladevorrichtung nach Anspruch 7 oder 8, **dadurch gekennzeichnet, dass** die Rückwand (R) in wenigstens zwei relativ zueinander verfahrbare Wandelemente (R1, R2) teilbar ist.

10. Umladevorrichtung nach einem der Ansprüche 7 bis 9, **dadurch gekennzeichnet, dass** die Vorrichtung in vertikaler Richtung aus einer Ausgangslage in ein Hublage (H) verfahrbar ist.

11. Umladevorrichtung nach einem der Ansprüche 7 bis 10, **dadurch gekennzeichnet, dass** der Fixierdeckel (D) und/oder die Klemmbacken (K) zum Ausgleich von Unebenheiten in den Stapelseitenflächen oder an der Stapeloberseite Ausgleichselemente (12), insbesondere Airbags oder Polster, aufweisen.

12. Umladevorrichtung nach einem der Ansprüche 7 bis 11, **dadurch gekennzeichnet, dass** das Fußelement (F) in der Ausgangslage (A), der Kipplage (B), der Hublage (H) und/oder in jeder Lage dazwischen von dem Stapel (S) um die Achse (30) weggeschwenkt oder in Richtung (Z) verfahren werden kann.

13. Umladevorrichtung nach einem der Ansprüche 7 bis 12, **dadurch gekennzeichnet, dass**
a) die seitlichen Klemmbacken (K) jeweils um eine im wesentlichen in Richtung (Z) verlaufende Achse (40) auf die Seiten des Stapels (S) zu- bzw. von diesen fortschwenkbar sind, und/oder
b) dass die seitlichen Klemmbacken (K) in einer zur Richtung (Z) senkrechten Richtung (X) auf die Seiten des Stapels (S) zu- bzw. von diesen wegfahrbar sind.

14. Umladevorrichtung nach einem der Ansprüche 7 bis 13, **dadurch gekennzeichnet, dass** ein Rüttelelement (L) vorgesehen ist, mit dem der Stapel vorzugsweise in der Kipplage (B) zur Neuausrichtung einzelner Elemente des Stapels in Vibration versetzbar ist.

15. Umladevorrichtung nach einem der Ansprüche 7 bis 14, **dadurch gekennzeichnet, dass** die Kipplage (B) einer aus der Ausgangslage (A) um 180° um die Achse (20) gedrehten Lage entspricht.

16. Umladevorrichtung nach einem der Ansprüche 7 bis 15, **dadurch gekennzeichnet, dass** Antriebe für die Bewegungen der Klemmbacken (K) und/oder des Fußelements (F) und/oder der Vorrichtung sowie eine Steuerung dieser Antriebe vorgesehen sind.

## Claims

1. Method for rearranging stacks and for exchanging transport elements under stacked products according to the following method steps:
a) fastening a product stack (S) resting in an initial position (A) on a first transport element (T1), between the first transport element on the lower end of the stack (S) and a fastening cover (D) provided on the opposing upper end of the stack (S), the first transport element (T1) resting on a foot element (F),
b) clamping the stack between at least two additional opposing lateral faces by at least two clamping jaws (K),
c) pivoting and/or displacing the foot element (F) away from the lower face of the stack (S) so that the first transport element is released, **characterised by** the following method steps:
d1) removing the first transport element (T1),
d2) inserting a second transport element (T2) at the same position,
e) reversing the movements of the foot element (F) mentioned in step c) so that the second transport element (T2) may be replaced on the lower end of stack (S),
f) loosening the fastenings and clampings according to step a) and b).

2. Method according to claim 1, **characterised**
- **in that** between step b) and c) for unloading the first transport element (T1) and foot element (F), the entire stack (S) is pivoted about a substantially horizontal axis (20) into a tilted position (B) and
- **in that** a reverse pivoting movement occurs between step e) and f).

3. Method according to claim 2, **characterised in that**, in the tilted position (B), the stack is substantially horizontally arranged.

4. Method according to claim 3, **characterised in that**, in the tilted position (B), the stack is divided into two stacks by displacement of a rear wall (R) which may be divided into at least two wall elements (R1, R2) in order to insert a separation or transport element therebetween or to remove a separation or transport element therefrom.

5. Method according to claim 4, **characterised in that** the clamping jaws are released for the stack division process.

6. Method according to any one of the preceding claims, **characterised in that** some of the steps overlap chronologically.

7. Reloading device for rearranging products stacked on transport elements (T1) and exchanging transport elements, in particular for carrying out one of the aforementioned methods, with:
a) a rear wall (R) with a lower and an upper end, the rear wall (R) extending in a direction (Z) and the direction (Z) being substantially vertically aligned in an initial position (A), and
b) a foot element (F) for accommodating a product stack (S) arranged on a first transport element (T1), the foot element (F) being pivotable about a pivot axis (30) extending parallel to the rear wall (R) and/or being displaceable in the direction (Z), and
c) with a fastening cover (D) arranged on the upper end of the rear wall (R) displaceable in the Z-direction and/or pivotable about an axis for clamping the stack (S) in the direction (Z) between the fastening cover (D) and the foot element (F), and
d) with at least two lateral clamping jaws (K) for clamping the stack from the right and left between the clamping jaws (K), **characterised in that** the foot element (F) is movably fastened on the lower end of the rear wall.

8. Reloading device according to claim 7, **characterised in that** the device may be pivoted about a tilting axis (20) extending parallel to the rear wall (R) from the initial position (A) into a tilted position (B).

9. Reloading device according to claim 7 or 8, **characterised in that** the rear wall (R) may be divided into at least two wall elements (R1, R2) which are displaceable relative to one another.

10. Reloading device according to any one of claims 7 to 9, **characterised in that** the device may be displaced in a vertical direction from an initial position into a lifting position (H).

11. Reloading device according to any one of claims 7 to 10, **characterised in that** the fastening cover (D) and/or the clamping jaws (K) have compensating elements (12), in particular airbags or cushions, for compensating for unevenness in the lateral faces of the stack or on the upper face of the stack.

12. Reloading device according to any one of claims 7 to 11, **characterised in that** the foot element (F) in the initial position (A), the tilted position (B), the lifting position (H) and/or in any position therebetween may be pivoted away from the stack (S) about the axis (30) or may be displaced in the direction (Z).

13. Reloading device according to any one of claims 7 to 12, **characterised in that**
a) the lateral clamping jaws (K) may be respectively pivoted toward and/or away from the sides of the stack (S) about an axis (40) extending substantially in the direction (Z), and/or
b) **in that** the lateral clamping jaws (K) may be moved toward and/or away from the sides of the stack (S) in a direction (X) perpendicular to the direction (Z).

14. Reloading device according to any one of claims 7 to 13, **characterised in that** a vibrating element (L) is provided with which the stack may be set in vibration, preferably in the tilted position (B), for the realignment of individual elements of the stack.

15. Reloading device according to any one of claims 7 to 14, **characterised in that** the tilted position (B) corresponds to a position rotated about the axis (20) by 180° from the initial position (A).

16. Reloading device according to any one of claims 7 to 15, **characterised in that** drives are provided for the movements of the clamping jaws (K) and/or the foot element (F) and/or the device, as well as a control unit for these drives.

## Revendications

1. Procédé pour la transposition de piles et le remplacement d'éléments de transport placés sous des produits empilés, comprenant les étapes de :
a) fixer une pile de produits (S) reposant dans une position initiale (A) sur un premier élément de transport (T1) entre le premier élément de transport à l'extrémité inférieure de la pile (S) et un couvercle de fixation (D) prévu à une extrémité supérieure opposée de la pile (D), le premier élément de transport (T1) étant placé sur un socle (F),
b) serrer la pile entre au moins deux surfaces latérales espacées opposées l'une à l'autre, à l'aide d'au moins deux mâchoires de serrage (K)
c) éloigner le socle (F) de la face inférieure de la pile (S) en le pivotant et/ou en le déplaçant, de sorte que le premier élément de transport est dégagé,
**caractérisé par** les étapes suivantes de :
d1) enlever le premier élément de transport (T1),
d2) mettre en place un deuxième élément de transport (T2) au même endroit,
e) inverser les mouvements du socle (F) mentionnés à l'étape c), de sorte que le deuxième élément de transport (T2) est de nouveau placé à l'extrémité inférieure de la pile (S),
f) détacher les fixations et les serrages des étapes a) et b).

2. Procédé selon la revendication 1, **caractérisé en ce que**
- entre l'étape b) et l'étape c), pour délester le premier élément de transport (T1) et le socle (F), on effectue un pivotement de l'ensemble de la pile (S) dans une position basculée (B) autour d'un axe (20) sensiblement horizontal, et
- on effectue entre l'étape e) et l'étape f) un mouvement pivotant inverse au précédent.

3. Procédé selon la revendication 2, **caractérisé en ce que**, dans sa position basculée (B), la pile est disposée sensiblement à l'horizontale.

4. Procédé selon la revendication 3, **caractérisé en ce que** dans sa position basculée (B), la pile peut être divisée en deux piles par le déplacement d'une paroi arrière (R) divisible en au moins deux éléments de paroi (R1, R2), pour insérer ou retirer un élément de séparation et/ou de transport entre les deux piles.

5. Procédé selon la revendication 4, **caractérisé en ce que** les mâchoires de serrage sont desserrées pour l'opération de division de la pile.

6. Procédé selon une des revendications précédentes, **caractérisé en ce que** quelques-unes des étapes se chevauchent dans le temps.

7. Dispositif de transbordement pour la transposition de produits empilés sur des éléments de transport (T1) et le remplacement d'éléments de transport, en particulier pour la mise en oeuvre d'un des procédés mentionnés ci-dessus, comportant
a) une paroi arrière (R) présentant une extrémité inférieure et une extrémité supérieure, la paroi arrière (R) s'étendant dans une direction (Z), la direction (Z) étant orientée sensiblement à la verticale dans une position initiale (A) et
b) un socle (F) pour la réception d'une pile de produits (S) disposée sur un premier élément de transport (T1), le socle (F) pouvant pivoter autour d'un axe de pivotement (30) parallèle à la paroi arrière (R) et/ou se déplacer dans la direction (Z), et
c) un couvercle de fixation (D) disposé à l'extrémité supérieure de la paroi arrière (R), pouvant se déplacer dans la direction Z et/ou pivoter autour d'un axe pour le serrage de la pile (S) dans la direction (Z) entre le couvercle de fixation (D) et le socle (F), et
d) au moins deux mâchoires de serrage latérales (K) pour le serrage de la pile sur la droite et sur la gauche entre les mâchoires de serrage (K),
**caractérisé en ce que** le socle (F) est fixé de manière mobile à l'extrémité inférieure de la paroi arrière.

8. Dispositif de transbordement selon la revendication 7, **caractérisé en ce que** le dispositif peut pivoter autour d'un axe de basculement (20) parallèle à la paroi arrière (R) de la position initiale (A) à une position basculée (B).

9. Dispositif de transbordement selon la revendication 7 ou 8, **caractérisé en ce que** la paroi arrière (R) est divisible en au moins deux éléments de paroi (R1, R2) pouvant être déplacés l'un par rapport à l'autre.

10. Dispositif de transbordement selon une des revendications 7 à 9,
**caractérisé en ce que** le dispositif peut être déplacé dans la direction verticale d'une position initiale à une position de levage (H).

11. Dispositif de transbordement selon une des revendications 7 à 10,
**caractérisé en ce que** le couvercle de fixation (D) et/ou les mâchoires de serrage (K) présentent des éléments de compensation (12), en particulier airbags ou rembourrages, pour la compensation des irrégularités dans les surfaces latérales de la pile ou sur la face supérieure de la pile.

12. Dispositif de transbordement selon une des revendications 7 à 11,
**caractérisé en ce que** le socle (F) peut, dans la position initiale (A), la position basculée (B), la position de levage (H) et/ou toute position de la pile entre ces dernières, être pivoté à partir de la pile (S) autour de l'axe (30) ou déplacé dans la direction (Z).

13. Dispositif de transbordement selon une des revendications 7 à 12,
**caractérisé en ce que**
a) les mâchoires latérales (K) peuvent continuer à pivoter autour d'un axe (40) passant sensiblement dans la direction (Z) sur les côtés de la pile (S) en s'en approchant et/ou en s'en éloignant, et/ou
b) les mâchoires latérales (K) peuvent se déplacer dans une direction (X) perpendiculaire à la direction (Z) sur les côtés de la pile (S) en s'en approchant et/ou en s'en éloignant.

14. Dispositif de transbordement selon une des revendications 7 à 13,
**caractérisé en ce qu'**il est prévu un élément vibrant (L) au moyen duquel la pile, de préférence dans la position basculée (B), peut être mise en vibration pour une réorientation des éléments individuels de la pile.

15. Dispositif de transbordement selon une des revendications 7 à 14,
**caractérisé en ce que** la position basculée (B) correspond à une position pivotée de 180° autour de l'axe (20) à partir de la position initiale (A).

16. Dispositif de transbordement selon une des revendications 7 à 15,
**caractérisé en ce que** sont prévus des mécanismes d'entraînement pour les mouvements des mâchoires de serrage (K) et/ou du socle (F) et/ou du dispositif, ainsi qu'une commande desdits mécanismes d'entraînement.
